# EUROPÄISCHE PATENTANMELDUNG

(11) **EP 2 338 765 A1**
(43) Veröffentlichungstag der Anmeldung: **29.06.2011**
(21) Anmeldenummer: 10015790.8
(22) Anmeldetag: 17.12.2010
(51) Int. Cl.: B62D 25/02, B62D 65/02, B21D 5/00, B23K 26/00

(54) **Karosserieteil oder Strukturteil für ein Fahrzeug und ein Verfahren zu seiner Herstellung**

(30) Priorität: 23.12.2009 DE 102009060319
(71) Anmelder: DURA Automotive Body and Glass Systems GmbH, 58840 Plettenberg (DE)
(72) Erfinder: Horstkoetter, Ralf, 58644 Iserlohn (DE); Heuel, Gerd, 57462 Olpe (DE)
(74) Vertreter: Zinnecker, Armin

(57) **Zusammenfassung**

Ein Karosserieteil oder Strukturteil für ein Fahrzeug ist gekennzeichnet durch einen oder mehrere Abschnitte (2, 4) mit einer ersten Wandstärke und einen oder mehrere Abschnitte (3, 5) mit einer zweiten Wandstärke, wobei die Abschnitte (2, 3, 4, 5) durch Laserschweißen gefügt sind. Das gefügte Bauteil ist durch Umformen geformt (Fig. 1).

## Beschreibung

Die Erfindung betrifft ein Karosserieteil oder Strukturteil für ein Fahrzeug, insbesondere für ein Kraftfahrzeug. Dabei kann es sich insbesondere um eine A-Säule, eine B-Säule, eine C-Säule, eine Schachtleiste, einen Seitenaufprallträger, einen Schweller oder eine Dachstrebe handeln. Die Erfindung kann allerdings auch auf andere Karosserieteile oder Strukturteile von Fahrzeugen oder Kraftfahrzeugen angewendet werden.

Bei derartigen Karosserieteilen oder Strukturteilen entsteht das Problem, daß sie bestimmten Belastungen, insbesondere Biegebelastungen standhalten müssen. Da der Bauraum begrenzt ist, insbesondere bei A-, bei B- und bei C-Säulen in Strukturtürkonzepten, ist es mit Schwierigkeiten verbunden, die geforderten Steifigkeiten, insbesondere Biegesteifigkeiten zu erhalten. Dies gilt insbesondere dann, wenn das Karosserieteil oder Strukturteil durch ein Umformverfahren, insbesondere durch Rollprofilieren hergestellt wird.

Aus der EP 1 880 924 A2 ist ein Schweller für ein Kraftfahrzeug bekannt, der zwei Bauteile aufweist, die unter Bildung eines Hohlraums miteinander verbunden sind.

Die EP 1 880 779 offenbart einen Türschweller für ein Fahrzeug, der einen mittleren Abschnitt und Seitenabschnitte umfaßt.

Aufgabe der Erfindung ist es, ein verbessertes Karosserieteil oder Strukturteil für ein Fahrzeug vorzuschlagen.

Erfindungsgemäß wird diese Aufgabe durch die Merkmale des Anspruchs 1 gelöst. Das Karosserieteil oder Strukturteil umfaßt einen oder mehrere Abschnitte mit einer ersten Wandstärke und einen oder mehrere Abschnitte mit einer zweiten Wandstärke, die durch Laserschweißen gefügt sind. Das derart gefügte Bauteil ist durch Umformen geformt. Insbesondere ist das gefügte Bauteil durch Rollprofilieren geformt. Die Abschnitte sind vorzugsweise aus Metall hergestellt, insbesondere aus Stahl, Aluminium, Nichteisen-Metallen oder ähnlichen Werkstoffen oder Kombinationen davon. Die zweite Wandstärke ist von der ersten Wandstärke verschieden.

Durch die Kombination von Abschnitten mit unterschiedlichen Wandstärken kann die Steifigkeit des hergestellten Karosserieteils oder Strukturteils optimiert werden. Das Karosserieteil oder Strukturteil kann der Anwendung entsprechend ausgelegt werden, ohne das Gewicht unnötig zu erhöhen oder zusätzliche Bauteile integrieren zu müssen. Insbesondere ist es möglich, Abschnitte mit einer größeren Wandstärke an die Stellen zu legen, an denen größere Belastungen und größere Spannungen vorhanden sind. Dies ist insbesondere bei den Säulen eines Fahrzeugs oder Kraftfahrzeugs von Bedeutung, also der A-Säule, der B-Säule, der C-Säule oder sonstigen Säulen, aber auch bei Schachtleisten, Seitenaufprallträgern, Schwellern und Schwellerprofilen und Dachstreben, bei denen durch den Einsatz der unterschiedlichen Wandstärken anwendungsoptimierte Charakteristika realisiert werden können. Das Karosserieteil oder Strukturteil kann auf einfache Weise hergestellt werden. Insbesondere kann auf gepreßte Innenteile oder aufgesetzte gepreßte Zusatzteile verzichtet werden. Die damit verbundenen höheren Werkzeugkosten und zusätzlichen Arbeitsgänge können eingespart werden.

Vorteilhafte Weiterbildungen sind in den Unteransprüchen beschrieben.

Das gefügte Bauteil ist insbesondere durch Rollprofilieren oder Walzprofilieren geformt.

Vorteilhaft ist es, wenn einer oder mehrere Abschnitte zumindest teilweise aneinander anliegen. Die Unterabschnitte der Abschnitte, die aneinander anliegen, können miteinander verbunden sein, beispielsweise durch Punktschweißen oder eine andere Verbindungstechnik. Es ist allerdings auch möglich, daß die aneinander anliegenden Unterabschnitte der Abschnitte lediglich aneinander anliegen, ohne dort miteinander fest oder lösbar verbunden zu sein.

Einer oder mehrere Abschnitte können einen oder mehrere Hohlräume bilden. Dies kann unter Festigkeitsgesichtspunkten von Vorteil sein.

Die Erfindung betrifft ferner ein Verfahren zum Herstellen eines Karosserieteils oder eines Strukturteils für ein Fahrzeug, insbesondere für ein Kraftfahrzeug. Bei dem Verfahren handelt es sich insbesondere um ein Verfahren zum Herstellen eines erfindungsgemäßen Karosserieteils oder Strukturteils. Das erfindungsgemäße Verfahren ist dadurch gekennzeichnet, daß ein Materialstreifen mit einer ersten Wandstärke und ein Materialstreifen mit einer zweiten Wandstärke durch Laserschwei-βen gefügt werden. Der gefügte Materialstreifen wird umgeformt. Die Materialstreifen sind vorzugsweise aus einem Metall, wie oben näher beschrieben. Die zweite Wandstärke weicht von der ersten Wandstärke ab. Die Materialstreifen werden vorzugsweise in Längsrichtung gefügt. Vorteilhaft ist es, wenn die Materialstreifen in einer Umformanlage, insbesondere in einer Rollprofilieranlage in Längsrichtung durch Laserschweißen gefügt werden.

Der gefügte Materialstreifen wird vorzugsweise rollprofiliert.

Die Erfindung betrifft schließlich ein Fahrzeug, insbesondere ein Kraftfahrzeug, das durch eines oder mehrere erfindungsgemäße Karosserieteile und/oder Strukturteile und/oder eines oder mehrere Karosserieteile oder Strukturteile, die nach einem erfindungsgemäßen Verfahren hergestellt sind, gekennzeichnet ist.

Ausführungsbeispiele der Erfindung werden nachstehend anhand der beigefügten Zeichnung im einzelnen erläutert. In der Zeichnung zeigt
- Fig. 1: ein Karosserieteil eines Kraftfahrzeugs in einem Querschnitt und
- Fig. 2: ein weiteres Karosserieteil eines Kraftfahrzeugs, ebenfalls in einem Querschnitt.

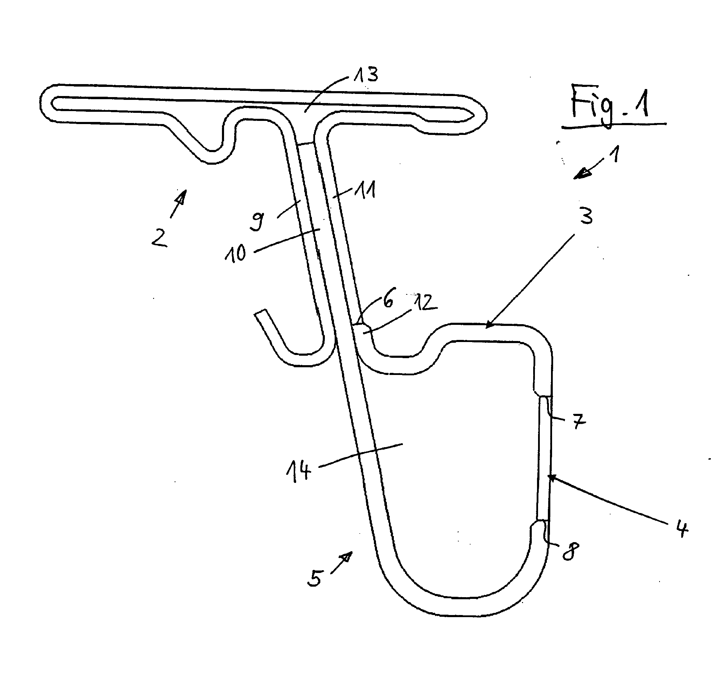

Fig. 1 zeigt ein Karosserieteil 1 in einem Querschnitt. Das Karosserieteil 1 umfaßt einen ersten Abschnitt 2 mit einer ersten Wandstärke, einen zweiten Abschnitt 3 mit einer zweiten, höheren Wandstärke, einen dritten Abschnitt 4 mit der ersten Wandstärke und einen vierten Abschnitt 5 mit der zweiten Wandstärke. Die Abschnitte 2, 3, 4, 5 sind durch Laserschweißen gefügt. Die Fügestellen 6, 7, 8 liegen an den Längsseiten der Abschnitte 2, 3, 4, 5. Die Abschnitte 2, 3, 4, 5 sind auf Stoß gefügt.

Bei der Herstellung werden den Abschnitten 2, 3, 4, 5 entsprechende Materialstreifen zunächst durch Laserschweißen gefügt. Dabei sind die Materialstreifen noch eben. Sie werden an ihren Längsseiten gefügt. Der gefügte Materialstreifen wird dann durch Rollprofilieren umgeformt.

Wie aus Fig. 1 ersichtlich liegt ein Unterabschnitt 9 des ersten Abschnitts 2 an einem Unterabschnitt 10 des vierten Abschnitts 5 an. Ein weiterer Unterabschnitt 11 des ersten Abschnitts 2 liegt an dem Unterabschnitt 10 des vierten Abschnitts 5 an. An diesem Unterabschnitt 10 des vierten Abschnitts 5 liegt ferner ein Unterabschnitt 12 des zweiten Abschnitts 3 an. Die Unterabschnitte 9 und 11, 12 liegen beidseits des Unterabschnitts 10. Sie fassen den Unterabschnitt 10 ein.

Ein Teil des ersten Abschnitts 2 bildet mit dem Ende des vierten Abschnitts 5 einen ersten Hohlraum 13. Ein Teil des zweiten Abschnitts 3, der dritte Abschnitt 4 und ein Teil des vierten Abschnitts 5 bilden einen zweiten Hohlraum 14.

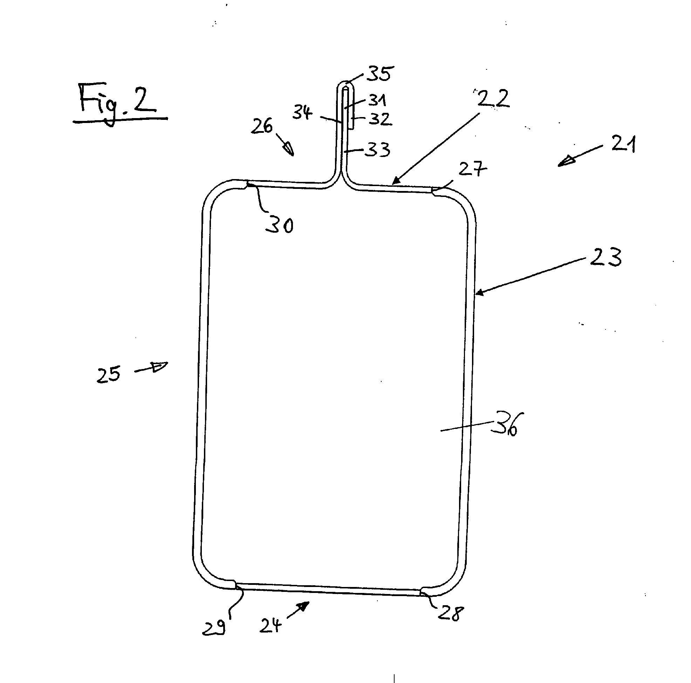

Fig. 2 zeigt ein abgewandeltes Karosserieteil 21, ebenfalls in einem Querschnitt. Es umfaßt einen ersten Abschnitt 22 mit einer ersten Wandstärke, einen zweiten Abschnitt 23 mit einer zweiten, größeren Wandstärke, einen dritten Abschnitt 24 mit der ersten Wandstärke, einen vierten Abschnitt 25 mit der zweiten Wandstärke und einen fünften Abschnitt 26 mit der ersten Wandstärke. Die Abschnitte 22, 23, 24, 25, 26 sind an ihren Längsseiten an Stoßstellen 27, 28, 29, 30 durch Laserschwei-βen gefügt. Das derart gefügte Bauteil ist durch Umformen, nämlich durch Rollprofilieren geformt.

Ein Unterabschnitt 31 des ersten Abschnitts 22 liegt an einem Unterabschnitt 32 des fünften Abschnitts 26 an. Der Unterabschnitt 31 des ersten Abschnitts 22 und ein weiterer Unterabschnitt 33 des ersten Abschnitts 22, der sich an den ersten Unterabschnitt 31 anschließt, liegen an einem weiteren Unterabschnitt 34 des fünften Abschnitts 26 an. Die Unterabschnitte 32 und 34 des fünften Abschnitts 26 sind durch einen U-förmigen Abschnitt 35 miteinander verbunden, der das Ende des Unterabschnitts 31 des ersten Abschnitts 22 einfaßt.

Die Abschnitte 22 - 26 bilden einen Hohlraum 36.

## Patentansprüche

1. Karosserieteil oder Strukturteil für ein Fahrzeug,
**gekennzeichnet durch**
einen oder mehrere Abschnitte (2, 4; 22, 24, 26) mit einer ersten Wandstärke und einen oder mehrere Abschnitte (3, 5; 23, 25) mit einer zweiten Wandstärke, wobei die Abschnitte (2, 3, 4, 5; 22, 23, 24, 25, 26) **durch** Laserschweißen gefügt sind und das gefügte Bauteil **durch** Umformen geformt ist.

2. Karosserieteil oder Strukturteil nach Anspruch 1, **dadurch gekennzeichnet, daß** das gefügte Bauteil durch Rollprofilieren geformt ist.

3. Karosserieteil oder Strukturteil nach Anspruch 1 oder 2, **dadurch gekennzeichnet, daß** einer oder mehrere Abschnitte (2, 3, 5; 22, 26) zumindest teilweise (9, 10, 11, 12; 31, 32, 33, 34) aneinander anliegen.

4. Karosserieteil oder Strukturteil nach einem der vorhergehenden Ansprüche, **dadurch gekennzeichnet, daß** einer oder mehrere Abschnitte (2, 5; 3, 4, 5; 22, 23, 24, 25, 26) einen oder mehrere Hohlräume (13, 14, 36) bilden.

5. Verfahren zum Herstellen eines Karosserieteils oder eines Strukturteils für ein Fahrzeug, insbesondere zum Herstellen eines Karosserieteils oder eines Strukturteils nach einem der Ansprüche 1 bis 5,
**dadurch gekennzeichnet,**
**daß** ein Materialstreifen (2, 4; 22, 24, 26) mit einer ersten Wandstärke und ein Materialstreifen (3, 5; 23, 25) mit einer zweiten Wandstärke durch Laserschweißen gefügt werden und der gefügte Materialstreifen umgeformt wird.

6. Verfahren nach Anspruch 5, **dadurch gekennzeichnet, daß** der gefügte Materialstreifen rollprofiliert wird.

7. Fahrzeug, insbesondere Kraftfahrzeug, **gekennzeichnet durch** eines oder mehrere Karosserieteile und/oder Strukturteile nach einem der Ansprüche 1 bis 4 und/oder eines oder mehrere Karosserieteile und/oder Strukturteile, die nach einem Verfahren nach den Ansprüchen 5 oder 6 hergestellt sind.
